# EUROPEAN PATENT APPLICATION

(11) **EP 0 865 914 A1**
(43) Date of publication of application: **23.09.1998**
(21) Application number: 98104782.2
(22) Date of filing: 17.03.1998
(51) Int. Cl.: B32B 27/32, C08K 5/00, C08J 5/18, B32B 27/18

(54) **Polymeric films**

(30) Priority: 18.03.1997 GB 9705546
(71) Applicant: Hoechst Trespaphan GmbH, 66539 Neunkirchen (DE)
(72) Inventor: Davidson, Paul Malcolm Mackenzie, Elcombe, Swindon SN4 0NW (GB); Biddiscombe, Helen Ann, North Petherton, Bridgwater TA6 6SN (GB); Govier, Rebecca Karen, Abbey Meads, Swindon SN2 3YB (GB); Ott, Marc Fritz Manfred, Wootton Bassett, Swindon SN4 8LJ (GB)
(74) Representative: Luderschmidt, Schüler & Partner GbR

(57) **Abstract**

Biaxially oriented polyolefin films having a polypropylene-based resin layer containing microvoids produced by orienting the beta-form of polypropylene, and at least one olefin copolymer outer layer thereon, the film having been biaxially stretched at below the melting point of the olefin copolymer of the said outer layer. Such films have high gloss.

## Description

This invention concerns polyolefin films having good gloss, particularly films of polypropylene-based resins; and to methods of making and using such films.

Good gloss is a characteristic of many polyolefin films, and especially for biaxially oriented polypropylene films. Indeed the gloss of such films has contributed to their wide acceptance for many end uses. However, the gloss tends to be highest for unfilled biaxially oriented propylene homopolymers. Olefin copolymer outer layers provided, for example, to increase printability, and fillers within the polypropylene layer for creating microvoids in the layer during orientation, generally reduce the gloss of such films.

Proposals have been made for improving the gloss of polypropylene films which have core layers containing microvoids induced by the presence of phase distinct filler particles such as chalk. One such proposal is to provide a layer of unfilled propylene homopolymer between the voided core layer and an outer olefin copolymer layer. While this approach to the problem has been successful, it defeats some of the advantages of using a voided core layer in that the film density is increased by the extra layer, and therefore film yield is decreased.

Furthermore, since the opacity of voided films is often not as great as desired, reductions in the effective amount of voiding within the films by adding unvoided thickness to the films, serves to reduce the opacity still further. Also, the use of intermediate layers of unfilled propylene homopolymer between voided propylene homopolymer core layers and outer layers of olefin copolymers can improve the gloss of the films, but after biaxial orientation the copolymers themselves usually have lower gloss than propylene homopolymers.

Accordingly, it is an object of the present invention to provide polyolefin films having high gloss and other useful characteristics.

It is also an object of the present invention, to provide methods of making and using such films.

In accordance with these and other objectives, there has been provided in accordance with the present invention, a polyolefin film comprising (i) a polypropylene-based resin layer containing microvoids, the microvoids produced by orienting the beta-form of polypropylene, and (ii) at least one olefin copolymer outer layer thereon, wherein the film has been biaxially stretched at below the melting point of the olefin copolymer.

There has also been provided in the present invention, a method of making a film as discussed above, comprising (a) forming a film containing (i) a base layer containing the beta-form of polypropylene and (ii) an olefin copolymer outer layer, and (b) biaxially stretching the film at a temperature below the melting point of the copolymer to form microvoids in the base layer.

There has also been provided in the present invention, a polyolefin film comprising (i) an opaque polypropylene-based resin layer containing no void initiating particles or opacifying pigments and (ii) at least one olefin copolymer layer, wherein the film has been biaxially stretched at below the melting point of the olefin copolymer.

Further objects, features, and advantages of the present invention will become apparent from the detailed description of preferred embodiments that follows.

According to the present invention there is provided a biaxially oriented polyolefin film comprising a polypropylene-based resin layer containing microvoids produced by orienting the beta-form of polypropylene, and at least one olefin copolymer outer layer thereon, the film having been biaxially stretched at below the melting point of the olefin copolymer of the said outer layer.

"Polypropylene-based resin" or "polypropylene-based polymer" and "Polypropylene" are used synonymously. These terms shall mean polymers containing at least 50 % by weight, based on the weight of the polymer, of propylene units.

"Web" shall mean a sheet like extrudate resulting from extruding the respective polymer melt or melts through a slot die and subsequent cooling of the melt to form the unoriented film.

"Base layer" shall mean either "the layer" in case of a monolayered film or the thickest layer, generally being the innermost, central layer of the multilayer structure.

"Beta form of polypropylene" shall mean that crystalline modification of polypropylene which has a lower melting point and a lower density than the common alpha form of propylene.

"Microvoids" shall mean the hollow vacuoles in the polymer matrix reducing the density of the oriented polypropylene film wherein the reduced density is lower than that of a corresponding film without any voids.

As a result of orienting the films at a temperature below the melting point of the olefin copolymer layer, the copolymer layer in general acquires a higher gloss than if it had been stretched at a temperature above its melting point. While stretching at such reduced temperatures could in theory be used to effect orientation of other polypropylene films, in practice it is generally not possible since at these reduced temperatures, the force required to stretch the normally occurring alpha-form of propylene homopolymers is high. The presence of organic or inorganic particulate voiding agents to effect voiding of such layers does not significantly improve the ability of such reduced temperature stretching. Unlike the alpha-form of polypropylene, stretching at temperatures below the melting point of the copolymer is possible with a web crystallized with a high level of the beta-form of polypropylene, since the force required to do so tends to be considerably lower.

Not only do films in accordance with the present invention in general have good gloss, the outer olefin copolymer layer has been found to be substantially non-heat sealable even if it is formed from a copolymer which is known to be heat sealable after processing under conditions usually used to produce oriented polypropylene films. However, the copolymer outer layers of films of the present invention are usually printable, particularly after being subjected to a treatment, such as corona or flame treatment, to increase their surface energy.

The beta-form of polypropylene is relatively unstable compared with the corresponding alpha-form under the conditions usually used to produce polypropylene films. Thus when melts of polypropylene are extruded and then cooled to form a polymeric film, which may then subsequently be stretched, the alpha-form of polypropylene tends to predominate. However, it is known to produce films using polypropylene containing high concentrations of the beta-form of polypropylene by mixing polypropylene containing a high proportion of the alpha-form with a suitable nucleating agent which induces the formation of high concentrations of the beta-form when it is molten and subsequently cooled.

One example of such a process is described in U.S. Patent No. 4,386,129, which is incorporated by reference in its entirety, in which a variety of so-called beta-nucleators are dispersed in polypropylene, following which films are produced therefrom by melting and subsequent cooling, the crystallinity of the resulting cast films being controlled by appropriate adjustment of the cooling conditions. Selective extraction of the beta-form of the polypropylene from the films leaving a matrix of the alpha-form is then used to impart porosity to the films.

U.S. Patent No. 5,231,126, which is incorporated by reference in its entirety, describes the use of two component mixtures of beta-nucleating agents to produce microporous films by mono- or biaxial stretching cast polypropylene webs containing a high concentration of the beta-form of polypropylene resulting from the use of the mixture of nucleating agents. It is believed that the porosity results from voids induced by the change of the beta-form into the alpha-form during the stretching process, the alpha-form having a higher density than the beta-form from which it is derived. The development of porosity during the stretching process is accompanied by a significant reduction in apparent film density and the films become opaque with a high degree of whiteness.

More recently it has been proposed in EP 0632095, which is incorporated by reference in its entirety, to use a variety of organic amides as beta-nucleating agents in the formation of mono- and biaxially stretched polypropylene films. Here, a melt of a mixture of polypropylene and the nucleating agent is cast into a film web which is allowed to crystallize at a temperature of 15 to 140°C to form a solid web containing the beta-form of polypropylene, following which the web is mono- or biaxially stretched at a temperature above 20°C but less than the melting point of the beta-form crystals in the web. The resulting stretched films are said to have high whiteness and hiding power combined with printability and writeability.

Microvoid formation during the plastic deformation of the beta-form of polypropylene is also described in the journal POLYMER (Vol. 35, No. 16, pp. 3442-5, 1995; and Vol. 36, No.13, pp. 2523-30, 1995), which is incorporated by reference in its entirety. Porosity is said to increase with higher crystallization and lower stretching temperatures, all samples containing the beta-form apparently becoming opaque when stretched at temperatures below 120-130°C.

Opacity due to microvoid formation also occurs when propylene homopolymers are blended with a variety of particulate materials and then biaxially stretched, numerous examples of this being known from the prior art. Typically, phase distinct organic or inorganic materials with a particle size of 1 to 10µm are used for the purpose. Such void-initiating particles (such as calcium carbonate) are not needed in the present film. Also opacifying pigments (such as titanium dioxide) are also unneeded in the present film.

In accordance with the invention, no external additives, such as calcium carbonate or other void- initiating particles like polyethylene terephtalate (PET) or titanium dioxide or other white pigments are needed to give an opaque film. External additives are additives other than polypropylene and being incompatible with polypropylene and causing formation of voids upon stretching.

In the present invention, the polypropylene-based resin or polypropylene based polymer can be any resin or polymer containing propylene units, generally at least 50% by weight of propylene units, preferably 80-100% by weight of propylene, for example 95-100% by weight of propylene, in each case based on the total polymer weight. The polypropylene-based polymer is preferably a propylene homopolymer or a random or block copolymer or terpolymer containing a major proportion (80-100wt%) of units derived from propylene, the remainder being ethylene or butylene and having a crystallinity of at least 40%, preferably 50 to 90%. Usually the polypropylene based polymer has a melting point of 140-170° C, preferably 155-165°C and a melt flow index (DIN 53 735 at 21,6 N and 230°C) of 1.0 - 10 g/10min, preferably 1.5-6.5 g/10min. Most preferred is isotactic propylene homopolymer containing about 100% propylene units and a melting point of 160-162°C.

The nucleating agent used to induce the formation of the beta-form of the polypropylene of the base layer can be selected from those proposed hitherto for such purpose. Any desired nucleating agent or agents can be used. However, particularly good results have been achieved using amides as proposed in EP 0632095, and more particularly N,N'-dicyclohexyl-2,6-naphthalene dicarboxamide.

The amount of nucleating agent used to induce the formation of the beta-form of polypropylene can be varied to give the desired beta-formation, for example, from 0.0001 to 5 wt%, preferably from 0,001 to 2 % wt% of the nucleating agent based on the weight of polypropylene, as described in EP 0632095, preferred amounts being from 0.001 to 1 wt%.

The copolymer outer layer can be in direct contact with the voided polypropylene base layer or it can be an outer layer on one or more intermediate layers on the base layer.

Examples of olefin copolymers which can be used for the outer layer include polymers containing units derived from one or more of ethylene, propylene, butene-1 and higher aliphatic alpha-olefins, and blends of such polymers. Polymers which can be used for intermediate layers, when present, include the olefin polymers used for the outer layer, and polyolefins extended with unsaturated carboxylic acids and derivatives thereof for example, acid ionomers and anhydrides.

Although one surface of the voided layer of films of the present invention will have an outer layer of an olefin copolymer thereon, the other surface of the base layer need not have any further layers thereon. However, this other surface of the voided layer can have one or more polymeric layers thereon, for example, a further layer, *e.g*., a layer of a normally heat sealable polymer, which can be the same as or different from the copolymer outer layer on the other side of the voided layer. Preferred materials for this further layer are selected from polyolefins which can be used for the copolymer outer layer on the other side of the voided layer.

Films in accordance with the present invention can include one or more additives used in the polyolefin art, for example slip agents, antistatic agents, antiblock agents, stabilizers, UV absorbers, and/or pigments, such additives, when present, are preferably present in amounts which do not significantly adversely affect the ability of polypropylene to crystallize in its beta-form. When additives are present, they can be added to one or more of the layers of which the film is constructed.

Films in accordance with the present invention can be produced using known methods, for example, by coextrusion through a slot die of melts of polymers of the two specified layers, with others which may be desired, to form a polymer web which cooled and thereafter sequentially biaxially stretched.

It is generally desirable to carry out certain of the processing steps, particularly the initial crystallization of the polypropylene from a melt containing the beta-form nucleating agent, under conditions which will bring about the formation of the desired film structure. More particularly, the cooling should be effected under conditions such that the beta-form of polypropylene is produced and void formation can occur during subsequent stretching of the films.

The cooling or crystallization temperature used to induce the formation of the beta-form of polypropylene in the polypropylene-based resin layer of films of the present invention prior to their being stretched, should be at least 20°C but less than the melting point of the beta-form of polypropylene. Although temperatures at the lower end of this range, for example, tip to 50°C, can be used, it is generally preferred to use temperatures of at least 70°C, and higher temperatures still are often preferred, for example, 90°C or more. However, the cooling temperature is preferably not more than 140°C, and from practical considerations it is preferably below the temperature at which the film sticks to surfaces used to cool it.

Cooling of the melt can be effected in air of a suitable temperature, but it is generally preferred to effect cooling by contacting the extruded web with a cooling surface, for example, a chill roll.

Subsequent biaxial stretching of the cooled web will in general, but not necessarily, effected sequentially, this enabling the conditions used in the two directions to be selected independently of each other. Stretching in the direction of extrusion (the machine direction) will usually be effected before stretching in the transverse direction.

The conditions used to effect stretching in the machine direction have been found to have a substantial effect on microvoid formation lower stretch temperatures and lower stretch ratios usually leading to increased voiding. A preferred temperature range for stretching in the machine direction is from 70 to 110°C, and more preferably from 80 to 95°C, and the stretch ratio used in the machine direction will usually be at least 3:1, a preferred range being from 3.5:1 to 8:1.

Subsequent stretching of the films in the transverse direction will in general be effected at lower temperatures than are conventionally used for the transverse stretching of polypropylene films, for example, at from 100 to 145°C, provided it is less than the melting point of the outer layer. Not only does this stretching serve to produce films with good gloss on the outer surface formed from the copolymer, for example, a 20° gloss of at least 25, the films often have low densities. The stretch ratio used in the transverse direction is preferably from 3:1 to 10:1.

Either or both surfaces of films of the present invention can, if desired, be subjected to a treatment to increase their surface energy, for example, using flame or corona discharge treatment.

The following Examples are given by way of illustration only, and do not limit the scope of the invention.

### Examples 1 to 6

A series of six polymer webs was produced by coextruding through a slot die melts of a propylene homopolymer containing 0.1 wt% of a beta-form nucleating agent (N,,N'-dicyclohexyl-2,6- naphthalene dicarboxamide; NJ-Star NU-100, ex New Japan Chemical Co., Ltd.), in all but one (Example 6) with a layer of a propylene/ethylene copolymer (4 wt% ethylene) on a surface of the homopolymer layer. The homopolymer layer of each web was cooled by bringing it into contact with a chill roll having a surface temperature of 100°C, and copolymer layer when present was cooled in the ambient air.

DSC measurements indicated the homopolymer layer contained a high level of the beta-form of polypropylene with Tₘ of 153°C.

Each of the cooled webs was then stretched 4.5:1 in the direction of extrusion by contacting them with heated rolls at 90°C and having different peripheral speeds to produce an opaque mono-axially stretched webs, DSC showing that virtually all of the beta-polypropylene had in each case been converted into the alpha-form.

The mono-axially stretched webs were then stretched 8.0:1 in the transverse direction using a stenter oven at a variety of temperatures shown in Table 1 to produce a series of biaxially stretched films.

The overall thicknesses, densities, optical densities, heat seal thresholds (HST) and 20° gloss values of the films produced are also given in Table 1.

### Example 7

A three layer polymer web was produced by coextruding through a slot die a core layer a melt of a mixture of a propylene homopolymer containing 5 wt% of chalk (mean particle size 3µm), with melts of the copolymer used in Examples 1 to 6, and the resulting web was cooled on a chill roll having a surface temperature of 20°C.

Thereafter, the web was stretched 4.5:1 in the machine direction by passing it over heated rolls with different peripheral speeds and a surface temperature of 110°C, followed by 8:1 in the transverse direction in a stenter oven at 160°C.

The overall thickness, density, optical density, heat seal threshold (HST), and 20° gloss values of this film are given in Table 1.

**Table 1**

| Ex. | Extra layer (µm) | TD stretch temp (°C) | Overall thickness (µm) | Film density (g/cm³) | Optical density | HST (°C) | Gloss (20°) |
|---|---|---|---|---|---|---|---|
| 1 | 1x1 | 136 | 55.0 | 0.58 | 0.85 | - | 30.8 |
| 2 | 1x1 | 128 | 60.0 | 0.58 | 0.83 | - | 40.1 |
| 3 | 1x1 | 120 | 60.5 | 0.61 | 0.775 | - | 44.5 |
| 4* | 1x1 | 158 | 38.2 | 0.88 | 0.36 | 122 | 27.2 |
| 5* | 1x1 | 144 | 54.0 | 0.59 | 0.87 | 122 | 11.9 |
| 6* | - | 128 | 54.0 | 0.58 | 0.78 | - | 22.8 |
| 7* | 2x1 | 160 | 50.0 | 0.75 | 0.55 | 122 | 16.00 |

| | | | | | | | |
|---|---|---|---|---|---|---|---|
| * Comparison Examples. | | | | | | | |

Examples 1 to 3 are in accordance with the present invention. The films had high gloss and were not heat scalable.

Examples 4 to 7 were not in accordance with the invention, the films of Examples 4 and 5 having been stretched in the transverse direction at a temperature above the melting point of the respective copolymer layers. The film of Example 6 did not include an outer copolymer layer, and the film of Example 7 was a prior art heat sealable film voided with chalk.

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

Great Britain Application No. 9705546.1, filed on March 18, 1997, the priority document for the present application is incorporated by reference in its entirety.

## Claims

1. A polyolefin film comprising (i) a polypropylene-based resin layer containing microvoids, the microvoids produced by orienting the beta-form of polypropylene, and (ii) at least one olefin copolymer outer layer thereon, wherein the film has been biaxially stretched at a temperature, in both the machine and transverse directions, below the melting point of the olefin copolymer.

2. A film according to claim 1, wherein the biaxial stretching has been effected at a temperature at least 5°C below the melting point of the olefin copolymer.

3. A film according to claim 1, wherein the biaxial stretching comprises stretching the film in the machine direction at a temperature of from 70 to 110°C.

4. A film according to claim 3, wherein the biaxial stretching comprises stretching the film in the machine direction at a temperature of from 80 to 95°C.

5. A film according to claim 1, wherein the biaxial stretching comprises stretching the film in the transverse direction at a temperature of from 100 to 145°C.

6. A film according to claim 1, wherein the surface of the film formed by the copolymer layer has a 20° gloss of at least 25.

7. A film according to claim 1, wherein a surface thereof has been treated to increase the surface energy thereof.

8. A film according to claim 1, wherein an intermediate polymeric layer is present between the layer containing microvoids and the outer layer.

9. A film according to claim 1, comprising one or more of a slip agent, an antistatic agent, an antiblock agent, a stabilizer, a UV absorber, or a pigment.

10. A film according to claim 1, which is printed.

11. A film according to claim 1, which comprises no void-initiating particles.

12. A film according to claim 1, which comprises no opacifying pigments.

13. A film according to claim 1, wherein the copolymer is a propylene-ethylene copolymer.

14. A film according to claim 1, wherein the copolymer layer is substantially not heat-sealable.

15. A method of a making a film as claimed in claim 1, comprising:
(a) forming a film containing (i) a base layer containing the beta-form of polypropylene and (ii) an olefin copolymer outer layer, and
(b) biaxially stretching the film at a temperature below the melting point of the copolymer, to form microvoids in the base layer.

16. A polyolefin film comprising (i) an opaque polypropylene-based resin layer containing no void-initiating particles or opacifying pigments and (ii) at least one olefin copolymer layer, wherein the film has been biaxially stretched at below the melting point of the olefin copolymer.
